# EUROPÄISCHE PATENTSCHRIFT

(11) **EP 3 744 457 B1**
(45) Veröffentlichungstag und Bekanntmachung des Hinweises auf die Patenterteilung: **12.07.2023**
(21) Anmeldenummer: 20000187.3
(22) Anmeldetag: 15.05.2020
(51) Int. Cl.: B23D 47/04, B27B 31/08, B07C 5/12, B07C 5/14, B07C 5/36

(54) **VORRICHTUNG ZUM AUSSORTIEREN VON ABFALLSTÜCKEN AN SÄGEN, VORZUGSWEISE AN OPTIMIERUNGSKAPPSÄGEN**
DEVICE FOR SORTING WASTE PIECES AT SAWS, PREFERABLY TO OPTIMISING CUTTING SAWS
DISPOSITIF DE TRI DES DÉCHETS SUR DES SCIES, DE PRÉFÉRENCE SUR DES TRONÇONNEUSE D'OPTIMISATION

(30) Priorität: 24.05.2019 DE 202019002325 U
(43) Veröffentlichungstag der Anmeldung: 02.12.2020
(73) Patentinhaber: Weinig Dimter GmbH & Co. KG, 89257 Illertissen (DE)
(72) Erfinder: Reinbold, Georg, 88400 Biberach (DE); Locherer, Herbert, 88471 Laupheim (DE); Schmid, Thomas, 89129 Langenau (DE)
(74) Vertreter: Kohl, Karl-Heinz

(56) Entgegenhaltungen:
- EP-A2- 1 889 699
- US-A- 4 794 963
- US-A1- 2002 000 400
- US-A1- 2013 091 995
- US-A1- 2014 290 456

## Beschreibung

Die Erfindung betrifft eine Vorrichtung zum Aussortieren von Abfallstücken an Sägen, vorzugsweise an Optimierungskappsägen, nach dem Oberbegriff des Anspruches 1. Eine solche Vorrichtung gemäß dem Oberbegriff des Anspruchs 1 ist offenbart in US4794963.

Aus dem Dokument EP 1 889 699 A2 ist eine Vorrichtung zum Aussortieren von Abfallstücken an Sägen nach dem Oberbegriff des Anspruches 1 bekannt.

Um Holzwerkstücke weiter zu verarbeiten, ist es notwendig, in ihnen vorhandene Fehlstellen zu entfernen. Hierzu werden die Fehlstellen an den Holzwerkstücken markiert und anhand der Markierungen die Fehler aus den Werkstücken herausgesägt. Die herausgesägten, die Fehlstellen enthaltenden Teile der Werkstücke stellen Abfallstücke dar, die aussortiert werden. Die Gutteile werden weitergefördert.

Um die Abfallstücke auszusortieren, ist ein Abfallschacht vorgesehen, der dann geöffnet wird, wenn Abfallstücke entfernt werden sollen. Solange keine Abfallstücke auszusortieren sind, bleibt der Abfallschacht geschlossen. Das Öffnen des Abfallschachtes erfordert Zeit, was sich auf die Leistung der Vorrichtung auswirkt.

Der Erfindung liegt daher die Aufgabe zugrunde, die gattungsgemäße Vorrichtung so auszubilden, dass sie eine hohe Leistung erbringt.

Diese Aufgabe wird bei der gattungsgemäßen Vorrichtung erfindungsgemäß mit den kennzeichnenden Merkmalen des Anspruches 1 gelöst.

Die erfindungsgemäße Vorrichtung hat zusätzlich zum Abfallschacht die Ausblaseinrichtung, mit der die Abfallstücke quer zur Transportrichtung der Werkstücke nach dem Sägevorgang weggeblasen werden können. Hierfür ist es nicht erforderlich, den Abfallschacht zu öffnen. Dadurch ist es möglich, die Werkstücke mit voller Leistung des Vorschubes durch die Vorrichtung zu transportieren. Erfahrungsgemäß sind die Fehlstellen im Werkstück so vorhanden, dass die Abfallstücke in Transportrichtung der Werkstücke nur eine geringe Länge haben, so dass diese Abfallstücke einfach und zuverlässig nach den Sägeschnitten herausgeblasen werden können.

Die in Transportrichtung gemessene Länge der wegzublasenden Abfallstücke wird dadurch bestimmt, dass der in Transportrichtung der Werkstücke gemessene Abstand der hinter der Säge angeordneten Vorschubrolle vom Sägeblatt der Säge größer ist als die Länge des wegzublasenden Abfallstückes. Dadurch wird sichergestellt, dass das wegzublasende Abfallstück noch nicht von der hinter der Säge befindlichen Vorschubrolle erfasst worden ist.

Ist hingegen das Abfallstück in Transportrichtung der Werkstücke so lang, dass es bereits von der hinter der Säge befindlichen Vorschubrolle erfasst worden ist, sorgt die Steuerung dafür, dass der Abfallschacht zumindest teilweise geöffnet wird. Dann kann das durch die Vorschubrolle weitertransportierte Abfallstück in den Abfallschacht fallen.

Die Ausblaseinrichtung weist in vorteilhafter Weise Düsenöffnungen für den Austritt von Druckluft auf. Die Düsenöffnungen sind so angeordnet, dass die aus ihnen austretende Druckluft die Abfallstücke zuverlässig erfasst und wegblasen kann.

Vorteilhaft ist es, wenn die Vorrichtung in Transportrichtung der Werkstücke vor der Säge eine zweite Ausblaseinrichtung aufweist, um mit ihr Abfallstücke quer zur Transportrichtung der Werkstücke wegzublasen. Diese zweite Ausblaseinrichtung ist dann vorgesehen, wenn Endstücke der Werkstücke entfernt werden sollen. Diese Endstücke befinden sich noch vor der Säge und werden mittels der zweiten Ausblaseinrichtung entfernt.

Vorteilhaft ist auch die zweite Ausblaseinrichtung mit Düsenöffnungen für den Austritt von Druckluft versehen. Die Düsenöffnungen sind so vorgesehen, dass die aus ihnen austretende Druckluft die Endstücke zuverlässig erfasst und wegbläst.

Eine einfache Ausbildung ergibt sich, wenn die Düsenöffnungen der Ausblaseinrichtungen hinter und/oder vor der Säge an einem Seitenanschlag für die Werkstücke vorgesehen sind. Die Werkstücke liegen bei ihrem Transport durch die Vorrichtung an diesem Seitenanschlag an, so dass die Abfallstücke bei einer solchen Ausbildung der Vorrichtung einwandfrei weggeblasen werden können. Für die Düsenöffnungen der Ausblaseinrichtung sind keine gesonderten zusätzlichen Bauteile erforderlich. Vielmehr wird der ohnehin in der Vorrichtung vorhandene Seitenanschlag für die Werkstücke dazu benutzt, an ihm die Düsenöffnungen vorzusehen.

Die Ausblaseinrichtung ist bevorzugt in Transportrichtung der Werkstücke vor dem Abfallschacht angeordnet. Daher können die Abfallstücke bereits entfernt werden, bevor die Werkstücke in den Bereich des Abfallschachtes gelangen. Er muss daher nicht geöffnet werden, weil die Abfallstücke zuvor bereits weggeblasen worden sind.

Damit das Entfernen der Abfallstücke mittels der Ausblaseinrichtung zuverlässig erfolgt, ist die Ausblaseinrichtung vorteilhaft an eine Steuerung angeschlossen. Mit ihr wird die Ausblaseinrichtung exakt dann betätigt, wenn das wegzublasende Abfallstück sich im Bereich der Ausblaseinrichtung befindet.

Vorteilhaft sind an die Steuerung auch die Säge und die Vorschubrollen angeschlossen. Die Steuerung stellt somit sicher, dass die Werkstücke zum einen positionsgenau für den Sägeschnitt an der Säge positioniert werden, zum anderen die Ausblaseinrichtung dann betätigt wird, wenn das Abfallstück aus dem Werkstück herausgetrennt worden ist.

Die erfindungsgemäße Vorrichtung ermöglicht ein kombiniertes Aussortieren aller Abfallstücke mit entsprechender Länge. Da die Abfallstücke in der Mehrzahl in Transportrichtung der Werkstücke nur kurz sind, können diese kurzen Abfallstücke weggeblasen werden, so dass ein Öffnen des Abfallschachtes nicht erforderlich ist. Dadurch können die Werkstücke mit voller Leistung des Vorschubes durch die Vorrichtung transportiert werden. Nur in den seltenen Fällen, dass die Abfallstücke so lang sind, dass sie von der hinter der Säge befindlichen Vorschubrolle erfasst werden, ist es notwendig, den Abfallschacht zu öffnen.

Der Anmeldungsgegenstand ergibt sich nicht nur aus dem Gegenstand der einzelnen Schutzansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

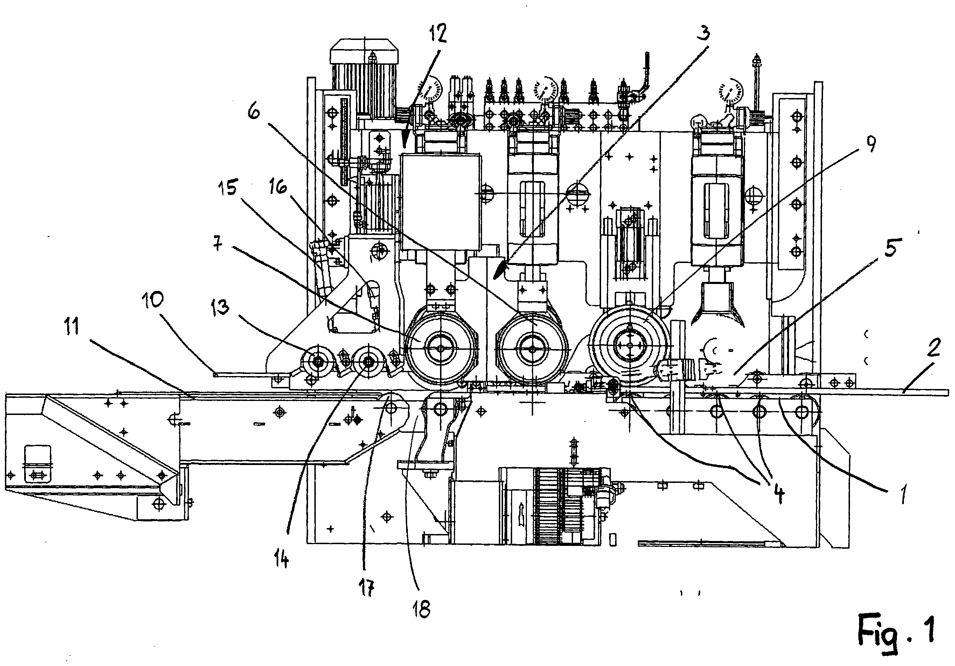

Die Erfindung wird anhand eines in den Zeichnungen dargestellten Ausführungsbeispieles näher erläutert. Es zeigen
- Fig. 1: in Vorderansicht eine erfindungsgemäße Vorrichtung,
- Fig. 2: in vergrößerter und perspektivischer Darstellung einen Bereich der Vorrichtung gemäß Fig. 1, in dem Düsenöffnungen zum Austritt von Druckluft vorgesehen sind, wobei aus in Durchlaufrichtung der Werkstücke hinter einer Säge Druckluft austritt,
- Fig. 3: eine Darstellung entsprechend Fig. 2, wobei Druckluft aus in Durchlaufrichtung vor der Säge angeordneten Düsenöffnungen austritt,
- Fig. 4: in einer Darstellung entsprechend Fig. 2 ein Abfallstück, das durch die aus den Düsenöffnungen in Durchlaufrichtung hinter der Säge austretende Druckluft weggeblasen wird,
- Fig. 5: in einer Darstellung entsprechend Fig. 2 einen geöffneten Abfallschacht der erfindungsgemäßen Vorrichtung, durch den ein größeres Abfallstück nach unten fällt.

Die Vorrichtung hat eine Förderbahn 1, auf der zu sägende Werkstücke 2 einer Säge 3 zugeführt werden. Die Förderbahn 1 hat in Durchlaufrichtung des Werkstückes 2 durch die Vorrichtung hintereinander liegende Transportrollen 4, die um horizontale Achsen frei drehbar gelagert sind.

Im Bereich oberhalb der Transportrollen 4 ist die Vorrichtung mit Vorschubrollen 5 bis 7 versehen, die vorzugsweise höhenverstellbar sind, so dass sie auf unterschiedlich dicke Werkstücke 2 eingestellt werden können. Die Vorschubrollen 5 bis 7 können unabhängig voneinander oder auch durch einen gemeinsamen Antrieb drehbar angetrieben werden. Die Vorschubrollen 5 bis 7 werden so eingestellt, dass sie auf dem Werkstück 2 aufliegen, so dass es zuverlässig auf der Förderbahn 1 der Säge 3 zugeführt werden kann.

Die Vorschubrollen 5 bis 7 können abweichend vom dargestellten Ausführungsbeispiel auch unterhalb der Werkstücke 2 angeordnet sein, so dass sie die Werkstücke von unten belasten. Auch können die Vorschubrollen 5 bis 7 oberhalb und unterhalb der Werkstücke 2 angeordnet sein, an denen die Vorschubrollen oben und unten anliegen.

Die Säge 3 hat ein (nicht dargestelltes) Sägeblatt, das im Ausführungsbeispiel von unten nach oben während des Sägevorganges bewegt wird. Das Sägeblatt taucht in ein Gehäuse 8 ein, an dem sich das Werkstück 2 vorbei bewegt.

Der Vorschubrolle 5 ist ein Messrad 9 nachgeschaltet, das wie die Vorschubrollen 5 bis 7 um eine horizontale Achse drehbar ist. Das Messrad 9 hat größeren Durchmesser als die Vorschubrollen 5 bis 7 und wird nicht angetrieben. Das Messrad 9 liegt auf dem Werkstück 2 auf und ist an eine Steuerung angeschlossen. Das Messrad 9 wird beim Vorschub des Werkstückes 2 gedreht und sendet Messsignale an die Steuerung. Anhand der Messsignale ermittelt die Steuerung die Position des Werkstückes 2 in der Vorrichtung.

In Transportrichtung der Werkstücke 2 hinter der Vorschubrolle 7 hat die Vorrichtung wenigstens einen Niederhalter 10, der die gesägten Werkstückteile beim Abtransport durch ein endlos umlaufendes Sortierband 11 niederhält. Das der Säge 3 zugewandte Ende des Niederhalters 10 ist schräg aufwärts verlaufend ausgebildet, so dass die gesägten Werkstückteile zuverlässig unter den Niederhalter 10 gelangen. Er ist plattenförmig ausgebildet und kann quer zum Sortierband 11 höhenverstellt werden. Außerdem kann der Niederhalter 10 auch parallel zum Sortierband 11 verstellt werden. Der Niederhalter 10 kann somit optimal auf die zu transportierenden Werkstückteile eingestellt werden.

Der Niederhalter 10 ist an einer Tragvorrichtung 12 vorgesehen, an der auch die Antriebe zur Höhen- und/oder. Querverstellung des Niederhalters 10 vorgesehen sind.

An der Tragvorrichtung 12 befinden sich im Ausführungsbeispiel zwei Sortierrollen 13, 14, die unabhängig voneinander in der Höhe eingestellt werden können. Hierfür sind Stellzylinder 15, 16 an der Tragvorrichtung 12 vorgesehen. Mit den Stellzylindern 15, 16 können die Sortierrollen 13, 14 im gewünschten Maß verstellt werden. Mittels der Stellzylinder 15, 16 werden die Sortierrollen 13, 14 nach unten bis zur Auflage auf dem abgesägten Werkstückteil bewegt.

Das Sortierband 11 weist an seinem der Förderbahn 1 zugewandten Ende wenigstens eine Umlenkrolle 17 auf, über die das Sortierband 11 umgelenkt wird. Mit dem Sortierband 11 kann ein Abfallschacht 18 verschlossen werden, der sich zwischen dem Sortierband 11 und dem benachbarten Ende der Förderbahn 1 befindet.

Die Umlenkrolle 17 kann in Transportrichtung der Werkstücke 2 verstellt werden, wodurch es möglich ist, den Abfallschacht 18 zu schließen oder teilweise oder auch ganz zu öffnen. Die Verstellbarkeit der Umlenkrolle 17 ist bekannt und wird darum nicht näher beschrieben.

Das Sortierband 11 wird während des Betriebes der Vorrichtung kontinuierlich angetrieben. Mit ihm werden abgesägte Werkstückteile in noch zu beschreibender Weise weitertransportiert, insbesondere einer Sortiereinrichtung zugeführt. Mit ihr können die weitertransportierten Werkstückteile unter Berücksichtigung ihrer Eigenschaften sortiert werden.

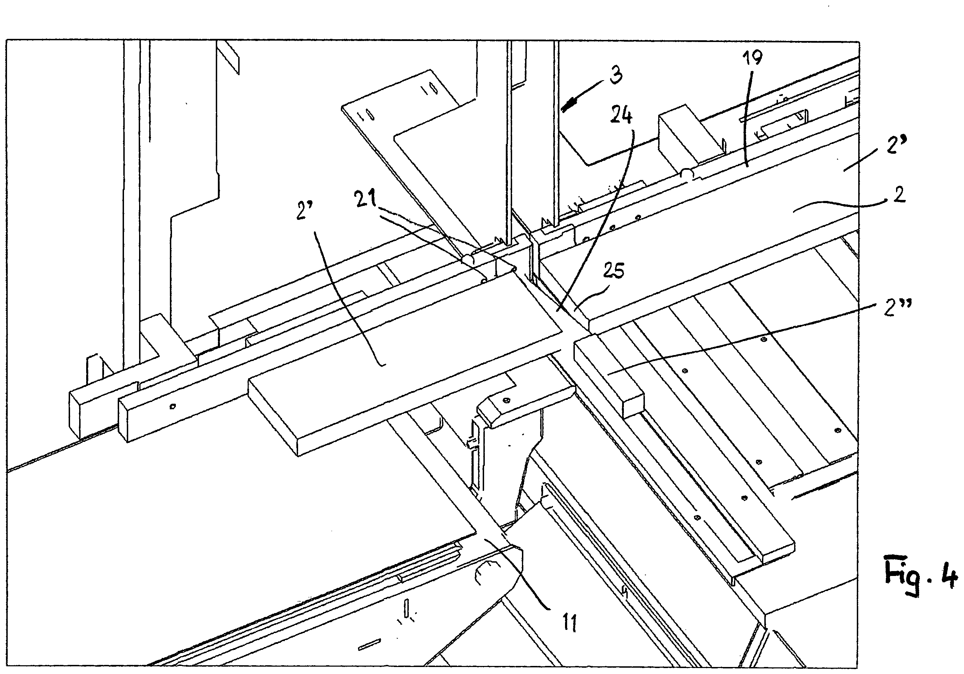

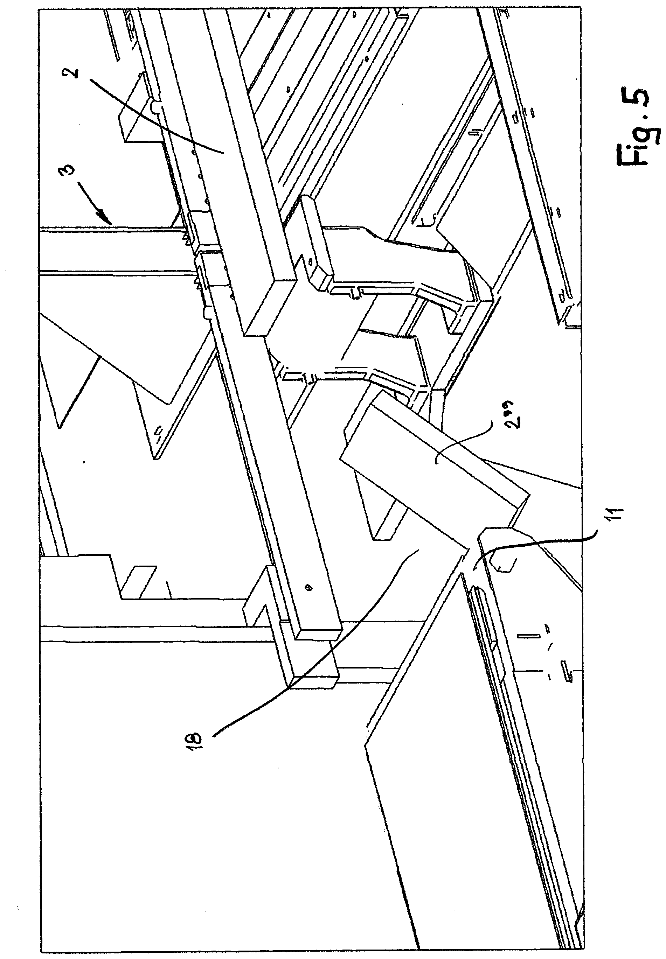

Die Werkstücke 2 werden vor dem Sägevorgang in Bezug auf Fehlstellen markiert. Dies kann manuell, beispielsweise mittels Kreidestrichen, aber auch automatisch mittels Scaneinrichtungen vorgenommen werden. Beim Einlaufen der Werkstücke 2 werden die Markierungen von einer entsprechenden Leseeinrichtung erfasst und entsprechende Signale der Steuerung der Vorrichtung zugeführt. Die Steuerung sorgt dafür, dass die Werkstücke 2 im Bereich der Säge 3 so angehalten werden, dass an den markierten Stellen die Sägeschnitte durchgeführt werden. Dadurch entstehen Gutteile 2' (Fig. 4), die auf das Sortierband 11 gelangen und weitertransportiert werden, und Abfallteile 2" (Fig. 4 und 5). Sie werden aussortiert, so dass sie nicht auf das Sortierband 11 gelangen.

Der Niederhalter 10 sorgt dafür, dass die gesägten Werkstücke (Gutteile 2') beim Abtransport durch das endlos umlaufende Sortierband 11 niedergehalten und dadurch beschleunigt werden.

Der Förderbahn 1 ist eine (nicht dargestellte) Transportvorrichtung vorgeschaltet, die vorteilhaft durch ein endlos umlaufendes Transportband gebildet ist, auf dem die Werkstücke der Vorschubrolle 5 zugeführt werden. Sie erfasst die Werkstücke 2 und transportiert sie in Richtung auf die Säge 3. Die Werkstücke werden dann von den der Säge 3 zugeordneten Vorschubrollen 6 und 7 übernommen, die das Werkstück 2 in die gewünschte Position für den Sägeschnitt transportieren. Sobald sich die Markierung bzw. Schnittposition des Werkstückes 2 in Höhe des Sägeblattes der Säge 3 befindet, wird der Antrieb der Vorschubrollen 5 bis 7 gestoppt und so das Werkstück 2 in der Säge 3 positioniert. Anschließend erfolgt der Sägeschnitt an der Schnittposition. Nach dem Sägeschnitt werden die Vorschubrollen 5 bis 7 wieder angetrieben, wobei die Vorschubrolle 7 das abgesägte Werkstückteil 2' unter den Niederhalter 10 transportiert.

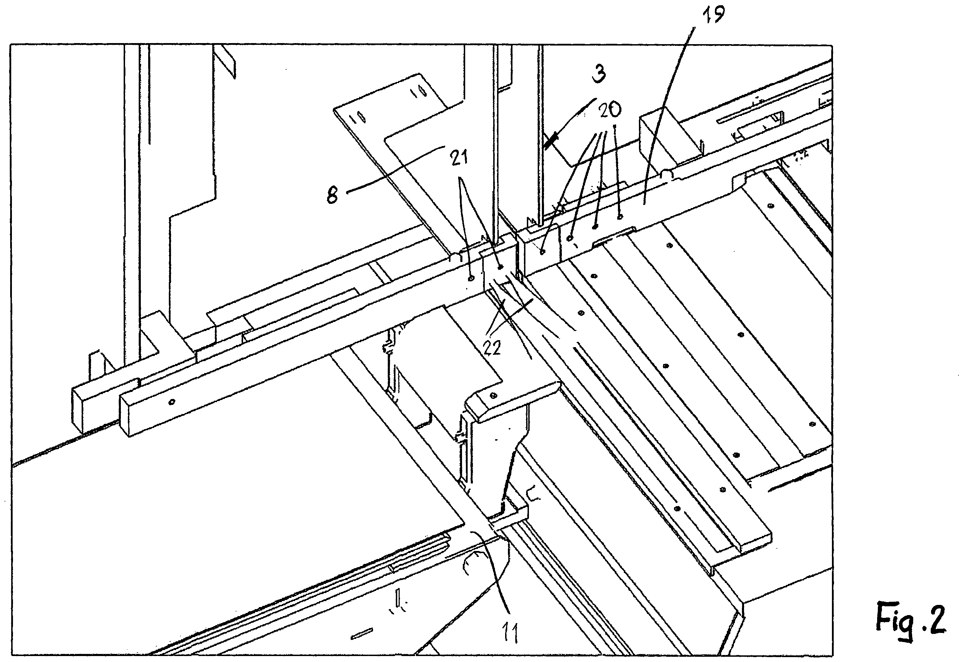

Die Vorrichtung ist mit einem Seitenanschlag 19 versehen (Fig. 2), der sich in Transportrichtung der Werkstücke 2 erstreckt und an dem die Werkstücke im Ausführungsbeispiel mit ihrer in Transportrichtung rechten Längsseite anliegen.

Wie Fig. 2 zeigt, befinden sich in Transportrichtung vor und hinter der Säge 3 Düsenöffnungen 20, 21, aus denen Druckluft austritt. Die Düsenöffnungen 21 in Transportrichtung hinter der Säge 3 dienen dem Ausblasen von Abfallstücken 2" (Fig. 4), die am Anfang und innerhalb des Werkstückes 2 abgetrennt worden sind und die eine bestimmte Länge nicht überschreiten.

Die Düsenöffnungen 20 in Transportrichtung vor der Säge 3 dienen zum Ausblasen der Endstücke der Werkstücke 2.

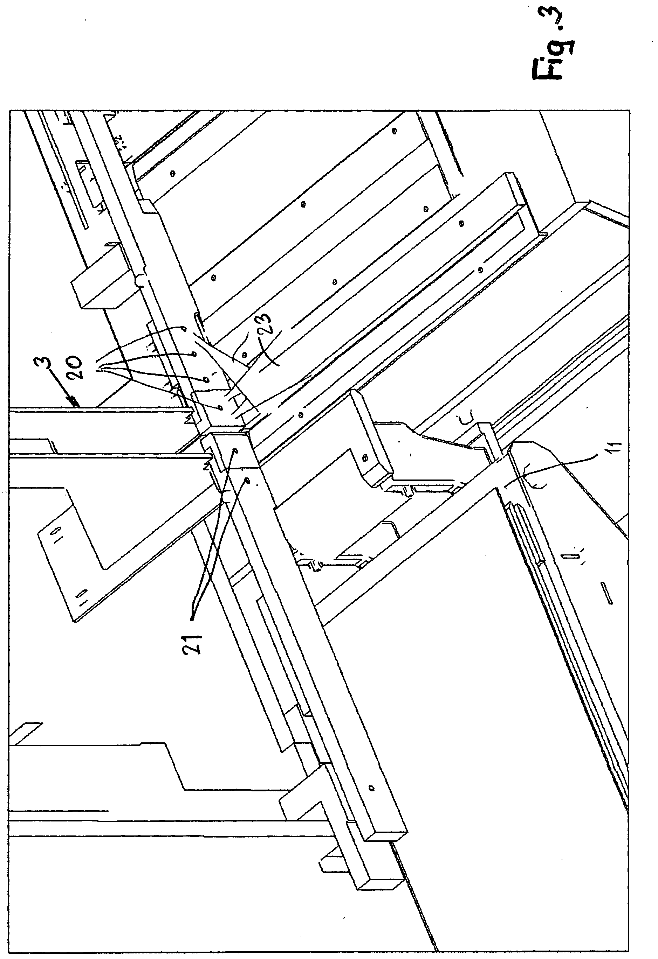

In Fig. 2 sind die aus den Düsenöffnungen 21 austretenden Druckluftstrahlen 22 und in Fig. 3 die aus den Düsenöffnungen 20 austretenden Druckluftstrahlen 23 schematisch dargestellt.

Fig. 4 zeigt beispielhaft den Fall, dass durch zwei Sägeschnitte innerhalb des Werkstückes 2 das Abfallstück 2" herausgesägt worden ist. Es hat in Transportrichtung des Werkstückes 2 nur eine geringe Länge. Mittels der Druckluftstrahlen 22 wird das Abfallstück 2" durch die aus den Düsenöffnungen 21 austretenden Druckluftstrahlen 22 quer vom Seitenanschlag 19 weggeblasen. Der Druck, unter dem die aus den Düsenöffnungen 21 austretende Druckluft steht, ist ausreichend hoch, um das Abfallstück 2" aus dem Werkstück 2 herauszublasen. Das Abfallstück 2" gelangt dann an eine Entsorgungsstelle, indem das Abfallstück 2" beispielhaft nach unten in Richtung auf den Abfallschacht 18 geleitet wird. Das Abfallstück 2" kann aber auch in jeder anderen geeigneten Weise aus der Vorrichtung entfernt werden.

Die Vorschubrollen 5, 6, 7 transportieren nun den Strang mit der durch das Wegblasen des Abfallstückes 2" entstandenen Lücke 24 weiter bis zur nächsten Schnittposition, an der der nächste Sägeschnitt am Werkstück 2 vorgenommen wird.

Die Vorschubrolle 7 ist so vorgesehen, dass sie nicht in die entstandene Lücke 24 eintauchen kann, wodurch es zu Störungen im Transport und/oder zu Beschädigungen des vorderen Randes 25 des nachfolgenden Gutteiles 2' im Werkstückstrang kommen könnte.

Hat das aus dem Werkstück 2 herauszutrennende Abfallstück 2" eine solche Länge in Transportrichtung, dass sich dieses Abfallstück nach dem zweiten Sägeschnitt bereits unter der Vorschubrolle 7 befindet, dann wird dieses Abfallstück nicht ausgeblasen. Vielmehr wird der Abfallschacht 18 geöffnet, indem die Umlenkrolle 17 des Sortierbandes 11 in Transportrichtung der Werkstücke zurückgefahren wird (Fig. 5). Wenn daher das längere Abfallstück 2" von der Vorschubrolle 7 freigegeben wird, fällt es nach unten in den geöffneten Abfallschacht 18, wie aus Fig. 5 hervorgeht.

in der Regel sind die Abfallstücke 2", die aus dem Werkstück 2 herauszutrennen sind, verhältnismäßig kurz, so dass diese, wie anhand von Fig. 4 beschrieben ist, sofort nach dem zweiten Sägeschnitt aus dem Werkstückstrang herausgeblasen werden können. Der Abfallschacht 18 muss daher nicht geöffnet werden. Dadurch ist ein Weitertransport der Werkstücke bzw. des Werkstückstranges mit voller Leistung des Werkstückvorschubes möglich.

Mit der Vorrichtung ist es somit möglich, je nach Länge der Abfallstücke 2" entweder die kurzen Abfallstücke 2" in der beschriebenen Weise wegzublasen oder längere Abfallstücke durch Öffnen des Abfallschachtes 18 zu entsorgen. Da erfahrungsgemäß die Schadstellen in den Werkstücken 2 überwiegend klein sind, entstehen beim Sägeschnitt auch nur entsprechend kurze Abfallstücke 2", so dass die Vorrichtung eine hohe Leistung aufweist.

Da die Schnittmarkierungen in einer Schnittliste der Steuerung zugeführt werden, welche den Vorschub der Werkstücke im Bereich der Säge 3 so anhält, dass die Säge mit ihrem Sägeblatt an der jeweiligen Schnittmarkierung den Sägeschnitt ausführen kann, ist damit auch die Länge der mittels der Säge aus dem Werkstück 2 herauszutrennenden Abfallstücke 2" bekannt. Dementsprechend wird über die Maschinensteuerung nach dem Sägeschnitt die Druckluft aus den Düsenöffnungen 21 herausgeblasen und das kurze Abfallstück 2" entfernt.

in gleicher Weise wird der Abfallschacht 18 durch Zurückfahren der Umlenkrolle 17 durch die Maschinensteuerung geöffnet, wenn das durch die zwei Sägeschnitte gebildete Abfallstück 2" die größere Länge aufweist.

Die Länge der Abfallstücke 2", die durch Druckluft seitlich weggeblasen werden können, richtet sich danach, ob nach dem zweiten Sägeschnitt, bei dem das Abfallstück 2" vollständig aus dem Werkstück 2 herausgetrennt worden ist, sich bereits unter dieser Vorschubrolle 7 befindet. In diesem Falle kann das Abfallstück 2" nicht mehr mittels Druckluft seitlich weggeblasen werden. Dann wird in der beschriebenen Weise durch Zurückfahren der Umlenkrolle 17 der Abfallschacht 18 so weit geöffnet, dass dieses Abfallstück 2" beim Vorschub durch die Vorschubrolle 7 nach unten fällt.

## Patentansprüche

1. Vorrichtung zum Aussortieren von Abfallstücken (2") an Sägen (3), vorzugsweise an Optimierungskappsägen, mit wenigstens einem Sägeblatt, dem wenigstens eine Vorschubrolle (5 bis 7) vor- und nachgeschaltet ist, mit mindestens einer der Säge nachgeschalteten Transportvorrichtung (11) für die gesägten Werkstückteile (2'), mit einem Abfallschacht (18), der durch die Transportvorrichtung (11) wahlweise verschließbar ist, und mit einer in Transportrichtung der Werkstücke (2) hinter der Säge (3) vorgesehen Ausblaseinrichtung zum Wegblasen von Abfallstücken (2") quer zur Transportrichtung der Werkstücke (2),
**dadurch gekennzeichnet, dass** der in Transportrichtung der Werkstücke (2) gemessene Abstand der hinter der Säge (3) angeordneten Vorschubrolle (7) vom Sägeblatt der Säge (3) die Länge des Abfallstückes (2") bestimmt, das von der Ausblaseinrichtung weggeblasen wird, dass die Steuerung den Abfallschacht (18) zumindest teilweise öffnet, wenn das Abfallstück (2") eine solche Länge hat, dass es von der hinter der Säge (3) befindlichen Vorschubrolle (7) erfasst wird.

2. Vorrichtung nach Anspruch 1,
**dadurch gekennzeichnet, dass** die Ausblaseinrichtung Düsenöffnungen (21) für den Austritt von Druckluft aufweist.

3. Vorrichtung nach Anspruch 1 oder 2,
**dadurch gekennzeichnet, dass** in Transportrichtung der Werkstücke (2) vor der Säge (3) eine weitere Ausblaseinrichtung zum Wegblasen von Abfallstücken (2") quer zur Transportrichtung der Werkstücke (2) vorgesehen ist.

4. Vorrichtung nach einem der Ansprüche 1 bis 3,
**dadurch gekennzeichnet, dass** die weitere Ausblaseinrichtung Düsenöffnungen (20) für den Austritt von Druckluft aufweist.

5. Vorrichtung nach einem der Ansprüche 1 bis 4,
**dadurch gekennzeichnet, dass** die Düsenöffnungen (20, 21) der Ausblaseinrichtung hinter und/oder vor der Säge (3) an einem Seitenanschlag (12) für die Werkstücke (2) vorgesehen sind.

6. Vorrichtung nach einem der Ansprüche 1 bis 5,
**dadurch gekennzeichnet, dass** die Ausblaseinrichtung in Transportrichtung der Werkstücke (2) vor dem Abfallschacht (18) angeordnet ist.

7. Vorrichtung nach einem der Ansprüche 1 bis 6,
**dadurch gekennzeichnet, dass** die Ausblaseinrichtung(en) an eine Steuerung angeschlossen ist (sind).

8. Vorrichtung nach einem der Ansprüche 1 bis 7,
**dadurch gekennzeichnet, dass** an die Steuerung die Säge (3) und die Vorschubrollen (5, 6, 7) angeschlossen sind.

## Claims

1. A device for sorting waste pieces (2") at saws (3), preferably at optimising cutting saws, comprising at least one saw blade, at least one feed roller (5 to 7) located upstream and downstream of the same blade at least one transport device (11) located downstream of the saw for the sawn workpiece parts (2'), a waste chute (18) that can be optionally closed by the transport device (11) and comprising a blow-out device provided downstream of the saw (3) in the transport direction of the workpieces (2) for blowing away waste pieces (2") transversely to the transport direction of the workpieces (2), **characterized in that** the distance of the feed roller (7) located downstream of the saw (3), measured in the transport direction of the workpieces (2), from the sawblade of the saw (3) determines the length of the waste piece (2") that is blown away by the blow-out device, that the controller at least partially opens the waste chute (18) when the waste piece (2") has such a length that it is detected by the feed roller (7) located downstream of the saw (3).

2. Device according to Claim 1, **characterized in that** the blow-out device has nozzle openings (21) for the discharge of compressed air.

3. Device according to Claim 1 or 2, **characterized in that** a further blow-out device for blowing away waste pieces (2") transversely to the transport direction of the workpieces (2) is provided in the transport direction of the workpieces (2) upstream of the saw (3) .

4. Device according to one of Claims 1 to 3, **characterized in that** the further blow-out device has nozzle openings (20) for the discharge of compressed air.

5. Device according to one of Claims 1 to 4, **characterized in that** the nozzle openings (20, 21) of the blow-out device are provided downstream and/or upstream of the saw (3) on a side stop (12) for the workpieces (2).

6. Device according to one of Claims 1 to 5, **characterized in that** the blow-out device is arranged upstream of the waste chute (18) in the direction of transport of the workpieces (2).

7. The device according to one of Claims 1 to 6, **characterized in that** the blow-out device(s) is (are) connected to a controller.

8. Device according to one of Claims 1 to 7, **characterized in that** the saw (3) and the feed rollers (5, 6, 7) are connected to the controller.

## Revendications

1. Dispositif de tri de déchets (2") sur des scies (3), de préférence sur des tronçonneuses d'optimisation, avec au moins une lame de scie, en amont et en aval de laquelle est monté au moins un rouleau d'alimentation (5 à 7), avec au moins un dispositif de transport (11) monté en aval de la scie pour lesdites pièces d'ouvrage (2'), avec un réceptacle à déchets (18), qui peut se fermer de manière sélectionnable par le dispositif de transport (11), et avec un système de soufflage prévu à l'arrière de la scie (3) dans la direction de transport des pièces (2), destiné à éliminer par soufflage des déchets (2") à la transversale de la direction de transport des pièces (2),
**caractérisé en ce que** l'écart mesuré dans la direction de transport des pièces (2) entre le rouleau d'alimentation (7) placé à l'arrière de la scie (3) et la lame de scie de la scie (3) détermine la longueur du déchet (2'') qui est éliminé par soufflage par le système de soufflage, en que le système de commande ouvre au moins en partie le réceptacle à déchets (18) si le déchet (2'') détient une longueur telle, qu'il soit saisi par le rouleau d'alimentation (7) se trouvant à l'arrière de la scie (3).

2. Dispositif selon la revendication 1,
**caractérisé en ce que** le système de soufflage comporte des orifices de buses (21) pour la sortie d'air comprimé.

3. Dispositif selon la revendication 1 ou 2,
**caractérisé en ce que** dans la direction de transport des pièces (2), à l'avant de la scie (3) est prévu un système de soufflage supplémentaire, destiné à éliminer par soufflage des déchets (2'') à la transversale de la direction de transport des pièces (2).

4. Dispositif selon l'une quelconque des revendications 1 à 3,
**caractérisé en ce que** le système de soufflage supplémentaire comporte des orifices de buses (20) pour la sortie d'air comprimé.

5. Dispositif selon l'une quelconque des revendications 1 à 4,
**caractérisé en ce que** les orifices de buses (20, 21) du système de soufflage sont prévus à l'arrière et / ou à l'avant de la scie (3) sur une butée latérale (12) pour les pièces (2).

6. Dispositif selon l'une quelconque des revendications 1 à 5,
**caractérisé en ce que** le système de soufflage est placé à l'avant du réceptacle à déchets (18), dans la direction de transport des pièces (2).

7. Dispositif selon l'une quelconque des revendications 1 à 6,
**caractérisé en ce que** le/s système/s de soufflage est/sont connecté/s sur un système de commande.

8. Dispositif selon l'une quelconque des revendications 1 à 7,
**caractérisé en ce que** sur le système de commande sont connectés la scie (3) et les rouleaux d'alimentation (5, 6, 7).
